# EUROPEAN PATENT SPECIFICATION

(11) **EP 3 027 091 B1**
(45) Date of publication and mention of the grant of the patent: **04.03.2020**
(21) Application number: 14814704.4
(22) Date of filing: 31.07.2014
(51) Int. Cl.: A47J 31/10, A47J 31/56

(54) **A HOT BEVERAGE PREPARATION MACHINE**
MASCHINE ZUR ZUBEREITUNG HEISSER GETRÄNKE
MACHINE DE PRÉPARATION DE BOISSONS CHAUDES

(30) Priority: 02.08.2013 TR 201309438
(43) Date of publication of application: 08.06.2016
(73) Proprietor: Arçelik Anonim Sirketi, 34445 Istanbul (TR)
(72) Inventor: AKGUL, Ozkan, 34950 Istanbul (TR); HATIPOGLU, Oner, 34950 Istanbul (TR)
(86) International application number: PCT/TR2014/000294
(87) International publication number: WO 2015/016799

(56) References cited:
- EP-A1- 0 771 542
- EP-A1- 2 005 865
- EP-A2- 1 522 247
- WO-A1-98/27854
- GB-A- 2 462 392
- US-A- 5 309 821
- US-B1- 6 260 477

## Description

The present invention relates to a hot beverage preparation machine comprising a control unit.

In hot beverage preparation machines, the water filled into the water container is heated by means of a portable water heater and is transferred to the brewing chamber containing raw material of the beverage to be prepared. The water container, wherein the boiling process is realized, not only heats the water and but also enables the heated water to be transferred to the brewing chamber. Water heating and water transfer processes are realized by the control unit by means of the heater disposed on the water container, the temperature sensor and the pump. Data and energy transfer between the heater, the temperature sensor, the pump and the control unit are provided by means of connectors. By simplifying the electrical connection among the control unit, the pump and the temperature sensor, the space occupied by the connectors on the control unit is decreased. Complex electrical and data connection structures increase the safety risk and material costs, make the production difficult and adversely affect the leak-proofing of the water container.

In the state of the art hot beverage making machines explained in the international patent application no WO2004008922 and the German patent application no DE19857165, the brewing chamber and the pot are positioned to be one above the other and the water reservoir is side by side with the brewing chamber and the pot

The aim of the present invention is the realization of a hot beverage preparation machine that can be used in a safe manner.

The hot beverage preparation machine realized in order to attain the aim of the present invention and explicated in the claims, comprises a water container, a water heater enabling the water in the water container to be heated, a temperature sensor disposed in the water container, a brewing chamber wherein the brewing process is performed as a result of the interaction between raw beverage material and water, a platform that is electrically connected to the water container when the water container is placed thereon, a pump that is situated on the water container and that enables the water heated in the water container to be transferred to the brewing chamber, and at least one connector that provides data transfer between the platform and the water container, thus enabling the temperature sensor, the pump and the water heater to be operated in a controlled manner.

The hot beverage preparation machine of the present invention comprises a control unit that activates the temperature sensor and the pump sequentially at different times. Since the temperature sensor and the pump can be controlled separately at different time via the same connector, the electrical connection between the control unit, the pump and the temperature sensor is simplified.

In an embodiment of the present invention, the hot beverage preparation machine comprises at least two switches that are situated on the platform, that are connected to the control unit and that determines the direction of the current to the connector. The switch guides the current to the pump or the temperature sensor depending on the hot beverage preparation process steps, thus, the temperature sensor and the pump, that are not required to be operated simultaneously, can be controlled via common connector connections.

In this embodiment, the hot beverage preparation machine furthermore comprises a diode unit that is situated on the water heater and that enables the current to be selectively passed over the pump or the temperature sensor. When the water transfer process is to be realized, the diode unit prevents the current from passing through the temperature sensor and enables energy to be supplied only to the pump.

In a derivative of this embodiment, the hot beverage preparation machine comprises the diode unit that is connected to the pump in series and that is connected to the temperature sensor in parallel.

In another derivative of this embodiment, the hot beverage preparation machine comprises the diode unit that is connected to the pump in parallel and that is connected to the temperature sensor in series.

By means of the hot beverage preparation machine of the present invention, the electrical connection between the control unit situated on the platform and the pump and the temperature sensor situated on the water container is simplified. Thus, the production of the hot beverage preparation machine is facilitated. Moreover, the space in the hot beverage preparation machine is effectively used.

The hot beverage preparation machine realized in order to attain the aim of the present invention is illustrated in the attached figures, where:

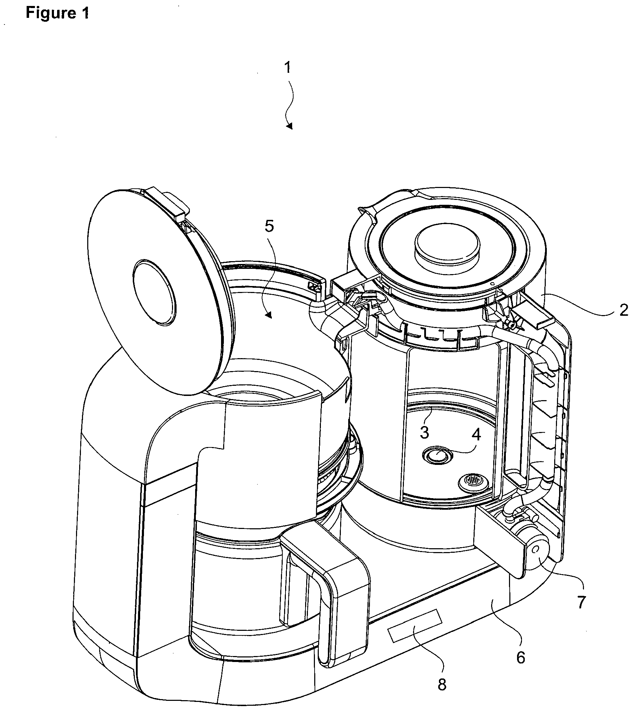

Figure 1 - is the schematic view of a hot beverage preparation machine .

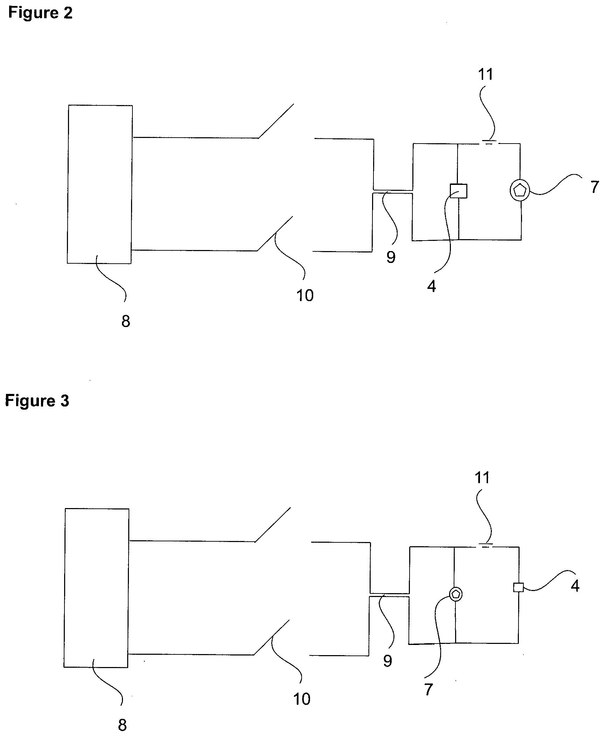

Figure 2 - is the control circuit diagram of the hot beverage preparation machine.
Figure 3 - is the alternative control circuit diagram of the hot beverage preparation machine.

The elements illustrated in the figures are numbered as follows:
1. Hot beverage preparation machine
2. Water container
3. Water heater
4. Temperature sensor
5. Brewing chamber
6. Platform
7. Pump
8. Control unit
9. Connector
10. Switch
11. Diode unit

The hot beverage preparation machine (1) comprises a water container (2) wherein water is filled, a water heater (3) enabling the water in the water container (2) to be heated, a temperature sensor (4) that is disposed on the water container (2) and that measures the temperature of the water heated in the water container (2), a brewing chamber (5) wherein the raw material of the beverage to be prepared is put and whereto the water heated in the water container (2) is transferred, wherein the brewing process is performed as a result of the interaction between the raw beverage material and water, a platform (6) whereon the water container (2) is placed, a pump (7) that is disposed on the water container (2) and that enables the water heated in the water container (2) to be transferred to the brewing chamber (5), and at least one connector (9), one end contacting the platform (6) and the other end contacting the water container (2) when the water container (2) is placed onto the platform (6). The connector (9) provides data transfer between the platform (6) and the water container (2). When the temperature of the water in the water container (2) reaches a predetermined temperature value, water is started to be transferred into the brewing chamber (5).

The hot beverage preparation machine (1) of the present invention comprises a control unit (8) that is situated on the platform (6) and that activates one of the temperature sensor (4) and the pump (7) while deactivating the other. Being operated at different times, the temperature sensor (4) and the pump (7) are connected to the control unit (8) via the common connector (9). Thus, data transfer among the control unit (8), the temperature sensor (4) and the pump (7) is simplified.

In an embodiment of the present invention, the hot beverage preparation machine (1) comprises at least two switches (10) that are situated on the platform (6), that are connected to the control unit (8) and that determines the direction of the current to the connector (9). According to the hot beverage preparation process steps, the switch (10) starts the water transfer process by guiding the current to the pump (7) or enables the temperature of the water in the water container (2) to be measured by guiding the current to the temperature sensor (4). Thus, the switch (10) activates the pump (7) while deactivating the temperature sensor (4).

In this embodiment, the hot beverage preparation machine (1) furthermore comprises a diode unit (11) that is situated on the water heater (3) and that enables the current to be selectively passed over the pump (7) or the temperature sensor (4). When the water transfer process is to be realized, the diode unit (11) prevents the current from passing through the temperature sensor (4) and enables energy to be supplied only to the pump (7).

In a derivative of this embodiment, the hot beverage preparation machine (1) comprises the diode unit (11) that is connected to the pump (7) in series and that is connected to the temperature sensor (4) in parallel.

In another derivative of this embodiment, the hot beverage preparation machine (1) comprises the diode unit (11) that is connected to the pump (7) in parallel and that is connected to the temperature sensor (4) in series.

By means of the hot beverage preparation machine (1) of the present invention, the structure providing data and energy transfer among the control unit (8), the temperature sensor (4) and the pump (7) is simplified. The production of the hot beverage preparation machine (1) is facilitated thanks to the temperature sensor (4) and the pump (7) being connected to the control unit (8) via the same connector (9). Moreover, by means of the portable water container (2), the platform (6) area is used effectively.

## Claims

1. A hot beverage preparation machine (1) **comprising**
- a water container (2) wherein water is filled,
- a water heater (3) that enables the water in the water container (2) to be heated,
- a temperature sensor (4) that is disposed on the water container (2) and that measures the temperature of the water heated in the water container (2),
- a brewing chamber (5) wherein the raw material of the beverage to be prepared is put and whereto the water heated in the water container (2) is transferred, wherein the brewing process is performed as a result of the interaction between the raw beverage material and water,
- a platform (6) whereon the water container (2) is placed,
- a pump (7) that is disposed on the water container (2) and that enables the water heated in the water container (2) to be transferred to the brewing chamber (5),
- at least one connector (9), one end contacting the platform (6) and the other end contacting the water container (2) when the water container (2) is placed onto the platform (6)
**characterized by**
- a control unit (8) that is situated on the platform (6) and that activates either the temperature sensor (4) or the pump (7) while deactivating the other.

2. A hot beverage preparation machine (1) as in Claim 1, **characterized by** at least two switches (10) that are situated on the platform (6), that are connected to the control unit (8) and that determines the direction of the current to the connector (9).

3. A hot beverage preparation machine (1) as in Claim 1 or 2, **characterized by** a diode unit (11) that is situated on the water heater (3) and that enables the current to be selectively passed over the pump (7) or the temperature sensor (4).

4. A hot beverage preparation machine (1) as in Claim 3, **characterized by** the diode unit (11) that is connected to the pump (7) in parallel and that is connected to the temperature sensor (4) in series.

5. A hot beverage preparation machine (1) as in Claim 3, **characterized by** the diode unit (11) that is connected to the pump (7) in series and that is connected to the temperature sensor (4) in parallel.

## Patentansprüche

1. Eine Heißgetränkezubereitungsmaschine (1) **umfasst**
- einen Wasserbehälter (2), worin Wasser befüllt wird,
- einen Warmwasserbereiter (3), mit dem das Wasser im Wasserbehälter (2) erwärmt werden kann,
- einen Temperatursensor (4), der an dem Wasserbehälter (2) angeordnet ist und die Temperatur des im Wasserbehälter (2) erwärmten Wassers misst,
- eine Brühkammer (5), in dessen das Rohmaterial des zubereitenden Getränks gegeben wird und wohin das in dem Wasserbehälter (2) erwärmte Wasser überführt wird, wobei der Brühvorgang infolge der Wechselwirkung zwischen dem Rohgetränkematerial und Wasser durchgeführt wird,
- eine Plattform (6), auf dessen der Wasserbehälter (2) gestellt wird,
- eine Pumpe (7), die am Wasserbehälter (2) angeordnet ist und es ermöglicht, dass das im Wasserbehälter (2) erwärmte Wasser in die Brühkammer (5) befördert wird,
- mindestens einen Verbinder (9), wobei ein Ende die Plattform (6) und das andere Ende den Wasserbehälter (2) berührt, wenn der Wasserbehälter (2) auf die Plattform (6) gestellt wird,
**gekennzeichnet ist es durch**
- eine Steuereinheit (8), die sich auf der Plattform (6) befindet und die entweder den Temperatursensor (4) oder die Pumpe (7) aktiviert, während die andere deaktiviert wird.

2. Eine Heißgetränkezubereitungsmaschine (1), wie in Anspruch 1 aufgeführt, **ist dadurch gekennzeichnet, dass** mindestens zwei auf der Plattform (6) angeordnete Schalter (10) mit der Steuereinheit (8) verbunden sind und die Richtung des Stroms zum Stecker (9) bestimmen.

3. Eine Heißgetränkezubereitungsmaschine (1), wie in Anspruch 1 oder 2 aufgeführt, **ist dadurch gekennzeichnet, dass** eine Diodeneinheit (11), die am Warmwasserbereiter (3) angeordnet ist und das wahlweise den Strom über die Pumpe (7) oder den Temperaturfühler (4) überleitet.

4. Eine Heißgetränkezubereitungsmaschine (1), wie in Anspruch 3 aufgeführt, **ist dadurch gekennzeichnet, dass** die Diodeneinheit (11) mit der Pumpe (7) parallel verbunden ist und mit dem Temperatursensor (4) in Reihe geschaltet ist.

5. Eine Heißgetränkezubereitungsmaschine (1), wie in Anspruch 3 aufgeführt, **ist dadurch gekennzeichnet, dass** die Diodeneinheit (11) die einer Reihe mit der Pumpe (7) und parallel mit dem Temperatursensor (4) verbunden ist

## Revendications

1. Une machine de préparation de boissons chaudes (1) **comprenant**
- un récipient d'eau (2) dans lequel de l'eau est versée,
- un chauffe-eau (3) qui permet de chauffer l'eau contenue dans le réservoir d'eau (2),
- un capteur de température (4) qui est disposé sur le réservoir d'eau (2) et qui mesure la température de l'eau chauffée dans le réservoir d'eau (2),
- une chambre de percolation (5) dans laquelle la matière première de la boisson à préparer est mise et dans laquelle l'eau chauffée dans le réservoir d'eau (2) est transférée, dans laquelle le processus de percolation est effectué par l'interaction entre la matière première de la boisson et l'eau,
- une plate-forme (6) sur laquelle est placé le réservoir d'eau (2),
- une pompe (7) qui est disposée sur le réservoir d'eau (2) et qui permet de transférer l'eau chauffée dans le réservoir d'eau (2) vers la chambre de percolation (5),
- au moins un connecteur (9), une extrémité étant en contact avec la plate-forme (6) et l'autre extrémité étant en contact avec le réservoir d'eau (2) lorsque le réservoir d'eau (2) est placé sur la plate-forme (6)
**est caractérisé en ce que**
- une unité de commande (8) est située sur la plate-forme (6) et qui active soit le capteur de température (4) soit la pompe (7) tout en désactivant l'autre.

2. Une machine de préparation de boissons chaudes (1) selon la déclaration 1, **est caractérisée en ce qu'**elle comporte au moins deux interrupteurs (10) qui sont situés sur la plate-forme (6), qui sont reliés à l'unité de commande (8) et qui déterminent le sens du courant vers le connecteur (9).

3. Une machine de préparation de boissons chaudes (1) selon la déclaration 1 ou 2, **est caractérisée en ce qu'**une unité de diodes (11) se trouve sur le chauffe-eau (3) et permet de faire passer le courant sélectivement sur la pompe (7) ou le capteur de température (4).

4. Une machine de préparation de boissons chaudes (1) selon la revendication 3, **est caractérisée en ce que** l'unité de diodes (11) est connectée à la pompe (7) en parallèle et au capteur de température (4) en série.

5. Une machine de préparation de boissons chaudes (1) selon la déclaration 3, **est caractérisée en ce que** l'unité à diodes (11) est connectée en série à la pompe (7) et en parallèle au capteur de température (4).
